# EUROPEAN PATENT SPECIFICATION

(11) **EP 4 375 156 B1**
(45) Date of publication and mention of the grant of the patent: **02.07.2025**
(21) Application number: 22208889.0
(22) Date of filing: 22.11.2022
(51) Int. Cl.: B60W 30/09, B60W 30/16, B60W 30/182, G06V 10/80, G06V 10/84, G06V 40/16, G06V 20/59

(54) **METHOD AND DATA PROCESSING DEVICE FOR CONTROLLING A DEVICE BASED ON A STATE OF ITS USER**
VERFAHREN UND DATENVERARBEITUNGSVORRICHTUNG ZUR STEUERUNG EINER VORRICHTUNG AUF BASIS EINES ZUSTANDES IHRES BENUTZERS
PROCÉDÉ ET DISPOSITIF DE TRAITEMENT DE DONNÉES POUR COMMANDER UN DISPOSITIF SUR LA BASE D'UN ÉTAT DE SON UTILISATEUR

(43) Date of publication of application: 29.05.2024
(73) Proprietor: TOYOTA JIDOSHA KABUSHIKI KAISHA, Aichi-Ken 471-8571 (JP)
(72) Inventor: ABDELKAWY, Hazem, 1140 Brussels (BE); TOLOSA SANCHEZ, Alfonso, 1140 Brussels (BE); DE WESER, Marleen, 1140 Brussels (BE)
(74) Representative: Cabinet Beau de Loménie

(56) References cited:
- US-A1- 2010 134 302
- US-A1- 2021 191 506
- US-A1- 2022 032 919
- ONNIA V ET AL: "Feature selection method using neural network", PROCEEDINGS 2001 INTERNATIONAL CONFERENCE ON IMAGE PROCESSING. ICIP 2001 - THESSALONIKI, GREECE, OCT. 7 - 10, 2001; [INTERNATIONAL CONFERENCE ON IMAGE PROCESSING], INSTITUTE OF ELECTRICAL AND ELECTRONICS ENGINEERS, NEW YORK, NY, vol. 1, 7 October 2001 (2001-10-07), pages 513 - 516, XP010564909, ISBN: 978-0-7803-6725-8, DOI: 10.1109/ICIP.2001.959066

## Description

### BACKGROUND OF THE INVENTION

### 1. Field of the invention

The present invention relates to the field of human machine interaction. It relates more particularly to a method for controlling a device based on a state of its user.

### 2. Related Art

Human machine interactions have known considerable progress thanks to the improvement of artificial intelligence systems. Instead of processing explicit user inputs only, recent progress have enabled computers to detect and infer implicit and complex user states such as physiological or emotional states. Such detection allows facilitating interactions between users and their devices, namely by allowing computer-based devices to perform actions adapted to their users. This is important for improving the ease of use of the device or the security of the user.

The prior art comprise several methods for detecting user's emotion.

The patent application CN 108805087 proposes an emotion recognition method based on multiple indicators such as user's facial expressions, speech tone, or content of user's speech.

The patent EP 3549430 B1 proposes a method for improving user comfort comprising an estimation of emotion based on biological data of the user.

US11440554B2 discloses a method and system for determining driver emotions in conjunction with a driving environment for classifying driver emotions in detail using driver emotion information and driving environment information of a vehicle at the time at which the emotion changes.

The methods and devices of the prior art do not allow identifying user's state such as emotional or physiological state with a satisfactory reliability or determining the appropriate action to be executed.

### SUMMARY OF THE INVENTION

The invention is defined by the appended independent claims. Further embodiments are defined in the dependent claims. The present disclosure overcomes one or more deficiencies of the prior art by proposing, according to a first aspect, a computer-implemented method for controlling a device, said method comprising at least one iteration comprising:
- obtaining, using sensors, data representative of said user and of an environment in which the user is;
- determining, based on said data, indicators of states of said user and at least one event indicator of an event occurring in said environment;
- determining, based on said state indicators and said data, using a Bayesian inference model, probabilities of states of said user; and
- determining, based on said probabilities and said at least one event indicator, using a first set of rules, at least one state of said user and at least one event causing the user to be in said at least one state;
said at least one iteration being repeated until a condition is fulfilled, said method further comprising:
- determining, based on said at least one state and event obtained during at least one said iteration, using a control policy, a control action of said device; and
- sending a command to said device to perform said control action.

The invention allows improving user-device interaction by controlling the device accordingly with the user state. In this purpose, the invention proposes to identify the state of the user and what event occurring in the environment is causing this state.

The "state of the user" may be a physiological state (e.g. awareness level, stress level) or an emotional state (e.g. fear, anger, surprise).

By "environment", we refer to the space and the objects surrounding the user and which the user can interact with, directly or indirectly. For instance, if the device is a car the user is driving, the environment may comprise the car and its surrounding space. An event occurring in the environment can be produced by the device (e.g. playing music or displaying information).

According to an embodiment, the device is a car and the action is a safety manoeuvre.

For instance, such a safety manoeuvre may be engaging a cruise control of the car or performing an emergency breaking.

Using both the state of the user and its context (the cause in the environment) instead of an out of context representation of user state advantageously enables to select more appropriate actions for the user, which may lead to improving the safety and/or the comfort of the user.

The invention proposes to determine the user's state and its cause in several successive steps by first obtaining data, then determining indicators of user's state, determining probabilities of states the user could be in, and identifying the state of the user. This allows the various aspects of the state to be decomposed and therefore the user's state to be accurately determined.

In the context of the invention, the "data" provide information about the user and/or its environment. Such data are for instance: recorded images of the user and/or its environment, audio recordings of the user and/or its environment. The data are obtained using sensors.

According to an embodiment, the sensors comprise at least one of the following sensors:
- an RGB camera;
- a microphone;
- a depth camera;
- an heart rate sensor; and
- an electrodermal activity sensor.

The state indicators, which are determined based on said data, describe different aspects of user's state. For instance, a state indicator may correspond to one of the following: facial expressions (e.g. smile, expression of surprise, expression of confusion), facial valence (e.g. a value indicating if user's face expression is positive or negative), speech valence (e.g. a value indicating if user's speech content is positive or negative), or tone emotion (e.g. the emotion emanating from user's voice tone).

The event indicator may describe dynamic events (e.g. "a pedestrian passes in front of the car") and or static event (e.g. "music is being played") in the environment.

The invention also proposes to determine probabilities of the user being in given states on the basis of the obtained data and state indicators. The Bayesian model enables to infer these probabilities. Such a model is constructed based on Bayesian rules and historical data comprising reference data and state indicator of users and their known states (determined by experts). Furthermore, it enables to infer the probabilities even if an input (a state indicator or certain data) is missing.

According to an embodiment, the step of determining probabilities is further based on at least one secondary state indicator determined based on at least one said state indicator and at least one other element among said state indicators and said data.

For instance, in embodiments, the secondary indicators are among at least one of the following features:
- a facial expression of the user,
- an indicator of a valence of an emotional state of the user, and
- an indicator of arousal level of the user.

A secondary state indicator may be determined by a classifier function (for instance to determine the facial expression of the user) or regression function (for instance for determining a level of valence). Such classifier or regression functions are fusion models since they take as input several state indicators and data to output higher level indicators (secondary indicators). For instance, a fusion model associated to the valence of user's emotion takes as input the state indicators of speech valence and facial valence of the user to output a global valence of the user.

In embodiments, these fusion models are neural networks trained on sets of inputs (state indicators and data of users their environment) and target outputs (known secondary indicators). In other embodiments, the fusion models may be any machine learning model or any inference model.

According to an embodiment, the at least one secondary state indicator is determined using at least one neural network.

The data, state indicators and secondary indicators constitute respectively low, mid, and high level information on user state and synergically enable to determine the probabilities of states of the user with more accuracy.

The state of the user and the event causing this state are determined using a so-called first set of rules. This first set of rules may form a causal model.

The term "causal model" refers here to a set of rules representing causal relationships within a system (user and its environment) inferring causal relationships from data. A causal model for emotions determines which event(s) cause(s) specific emotion.

The invention proposes to iterate one or more times the steps enabling to determine a state of the user and the event causing it. It has to be understood that each of these iterations lead to the determination of a user state and its cause at a given time step. Also, if several iterations are performed, several states and causes corresponding to different time steps are determined.

Once a certain condition is met, one or more states and their causes determined in the one or more performed iterations are used to determine a control action to be executed by the device.

In embodiments, this condition is that a given number of iterations has been performed. This given number may for instance be equal to one. In this case, the user's state and its cause determined at a single time step are used to determine the control action.

According to another embodiment, the condition is based on the at least one state and/or the at least one event obtained during current iteration.

This embodiment enables to determine a control action with a timing which depends on the current state and detected event. Advantageously, this can lead to better safety and reliability. For instance, in the case where the device is a car, a condition to determine the action may be that if the state is fear or surprise, an action (for instance a safety manoeuvre) has to be determined and applied, whereas if the state of the user is neutral, the iterations can be further repeated. In another example, depending if the event causing the state of the user is a potential danger (e.g. an obstacle on the road) or not (e.g. news on the radio), the action is determined and applied or the iterations are further repeated.

In an embodiment, the condition is that a said state of the user and/or the event causing this state are endangering the user.

According to an embodiment, said step of determining said at least one state and at least one event is further based on potential causes of said at least one state, said potential causes being obtained using a knowledge ontology.

The knowledge ontology enables to link different concepts. In the context of the invention, the ontology enables to link the states of the user (whose probabilities are determined using the Bayesian model) with events that could be the cause of the user state. For instance, if the probabilities comprise probabilities of emotions (e.g. fear, surprise, anger), each of these emotions is relied to one or more potential events that can cause this emotion. For instance, following the ontology https://conceptnet.io/c/en/emotion (August 2022), the emotion anger is linked with "being insulted" or "listening to the radio" with a causal relationship.

The potential causes provided by the ontology enable the causal reasoning model (i.e. first set of rules) to reliably determine the event causing of the user's state. In embodiments, the causal reasoning model may determine semantic similarity between the event indicator and the potential causes to determine the event causing the user's state as the most likely cause.

According to an embodiment, the step of determining a control action is further based on a profile of said user, said profile being determined based on said at least one state and event obtained during at least one said iteration, using a second set of rules.

In this embodiment, one or more states of the users and corresponding event are determined across time to form a profile of the user. The so-called second set of rules may form a temporal logic.

A temporal logic (or temporal reasoning model) is a system of rules reasoning about, propositions qualified in terms of time (for example, "I am always hungry", "I will eventually be hungry"). It captures change over time and can express the truth or falsity of statements at different times. In the context of the invention, it enables to identify a dominant state of the user during a given time period. It also enables to identify states which are incorrectly identified (i.e. false positives).

The profile of the user enables to determine an action that is more adapted to the user.

According to an embodiment, said data comprise primary features and at least one secondary feature, and said step of obtaining said data comprises the substeps of:
- obtaining said primary features using said sensors; and
- determining, based on said primary features, using at least one virtual sensor, said at least one secondary feature

The primary features (for instance: audio recording, video recording, sequence of heart rate values) are determined directly by the sensors (for instance: camera, micro, heart-rate sensor) whereas the secondary features (for instance: text of the user's speech, user's facial keypoints, body pose of the user, stress level of the user) are determined using virtual sensors based on the primary features. The term "virtual sensors" refers to software that, given the available information, processes what a physical sensor otherwise would.

The secondary features contain additional information which enables to determine state indicators with more reliability.

According to an embodiment, said state indicators and said at least one event indicator are determined using at least one neural network.

Neural networks enable to determine reliable (accurate) state indicators. Each state indicator is determined by a distinct neural network which has been trained on a distinct dataset. The training of the neural networks may be supervised, based on historical data comprising sets of reference data and their respectively associated state indicator. For instance, a neural network for determining speech valence is trained with a gradient descent algorithm to minimize a loss function. Such a loss function is representative of differences between the known speech valence metrics (scores) respectively associated to sets of data and the speech valence metrics output by the neural network based on these sets of data.

The inventors have observed that determining the state indicators with neural networks enable to determine the state of the user with more reliability. Furthermore, the neural networks enable to reliably determine states that are not possible to determine with satisfactory reliability if using methods of the prior art. Such states may be subtle emotional states such as frustration or satisfaction.

According to a second aspect, the invention proposes a data processing device for controlling a device, said data processing device comprising a module for implementing at least one iteration comprising:
- obtaining, using sensors, data representative of said user and of an environment in which the user is;
- determining, based on said data, state indicators of said user and at least one event indicator of an event occurring in said environment;
- determining, based on said state indicators and said data, using a Bayesian inference model, probabilities of states of said user; and
- determining, based on said probabilities and said at least one event indicator, using a first set of rules, at least one state of said user and at least one event causing the user to be in said at least one state;
said at least one iteration being repeated until a condition is fulfilled, said data processing device further comprising:
- a module of determining, based on said at least one state and event obtained during at least one said iteration, using a control policy, a control action of said device; and
- a module of sending a command to said device to perform said control action.

This data processing device can be adapted to implement a method according to any of the previous embodiments.

According to a third aspect, the invention provides a vehicle equipped with a data processing device according to an embodiment.

The invention also provides a computer program comprising instructions for performing the steps of the method according to any of the above-described embodiments when said program is executed by a computer.

It should be noted that the computer programs referred to in this paper may use any programming language, and be in the form of source code, object code, or code intermediate between source code and object code, such as in a partially compiled form, or in any other desirable form.

The invention provides storage medium, readable by computer equipment, of a computer program comprising instructions for executing the steps of the method according to one of the embodiments described above.

The storage media referred to in this statement may be any entity or device capable of storing the program and being played by any computer equipment, including a computer. For example, the medium may include a storage medium, or a magnetic storage medium, such as a hard drive. Alternatively, the storage media may correspond to a computer integrated circuit in which the program is incorporated and adapted to execute a method as described above or to be used in the execution of such method.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1A represents the steps of a method for controlling a device according to a first embodiment;
FIG. 1B represents the steps of a method for controlling a device according to a second embodiment;
FIG. 2A represents a data processing device for implementing the method for controlling according to the first embodiment;
FIG. 2B represents a data processing device for implementing the method for controlling according to the second embodiment;
FIG. 3 represents a vehicle equipped with a data processing device and sensors according to an embodiment;
FIG. 4 represents sensors and virtual sensors used for determining data according to an embodiment;
FIG. 5 represents neural networks used for determining indicators of states of the user according to an embodiment;
FIG. 6 represents neural networks used for determining secondary indicators according to an embodiment; and
FIG. 7 represents the hardware architecture of a data processing device according to an embodiment.

### DETAILED DESCRIPTION OF EMBODIMENTS

In the description hereafter, the invention is used to control a device Dev with respect to the emotional state of its user U. Furthermore, in the further described embodiments, the device Dev is a car. These particular embodiments are used as examples and do not limit the invention in any way. In particular, the invention may comprise the determination of other types of user states such as level of reactiveness or a physiological state. The invention can also be applied for controlling other types of device, such as a robot interacting with a human.

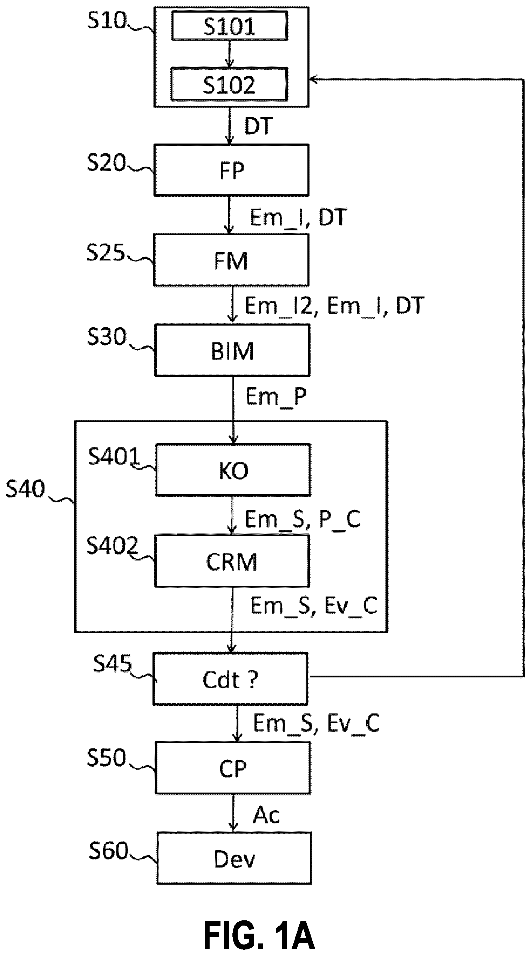

FIG. 1A represents the steps of a method according to an embodiment of the invention.

In the embodiment represented on FIG. 1A, one or more iterations of steps S10-S45 are carried out until a given condition Cond is met. Examples of such a condition are presented later in the description.

In step S10, data DT are obtained from the user U and its environment. In the described embodiment, the environment Env of the user comprises the space surrounding the user (inside and outside the car). Events in this environment can hence occur inside the car (e.g. a music is being played, new information are displayed on the GPS) or outside the car (e.g. an obstacle in front of the car).

In this embodiment, the data comprise both primary and secondary features. The primary features are data acquired directly from sensors, in a substep S101. The secondary features are the data determined based on the primary features and using virtual sensors, in a substep S102. Examples of primary and secondary features are given later in the description.

In other embodiments, the data comprise primary features only, i.e. data directly acquired from sensors.

In other embodiments, data comprises information manually input by the user (e.g. age, gender) on a user interface of the device.

The determining of secondary features with virtual sensors enables to provide additional information that enables a better estimation of the state of the user, without the need for user intervention for entering additional features (e.g. age, gender).

In step S20, indicators Em_I of states (hereafter called "state indicators") of the user U, as well as an event indicator, are determined based on data DT obtained in step S10, using neural networks FP. Examples of state indicators are given later in the description.

In this embodiment, a distinct neural network is used for each state indicator and event indicator to be determined. Each of these neural networks is trained on a distinct reference dataset. For instance for determining a facial expression of the user based on data DT as input, the corresponding neural network has been trained to classify facial expressions based on reference input data and their corresponding facial expression (which are manually annotated by experts, for instance). The training may be performed using a gradient descent algorithm.

A state indicator may be a scalar that quantifies a particular aspect of the user. For instance, in an embodiment a valence indicator is a scalar which takes a negative value for indicating a negative valence or a positive value for indicating a positive valence, and a value close to zero for indicating a neutral valence. The valence here corresponds to the negativity or positivity of the emotions of the user. For instance, emotions such as fear and anger have negative valence whereas content and happiness have positive valence.

An event indicator may be a vector of entries corresponding respectively to types of event. In this case, each entry may have a value of one or zero, one indicating an event of the type corresponding to the entry is detected, whereas a zero indicates no detection. The event indicator may comprise an additional entry corresponding to no occurrence of an event at the time of the current iteration.

In step S25, secondary indicators Em_I2 are determined based on state indicators Em_I and data DT. The secondary indicators Em_I2 may provide higher level information on the state of the user U. Examples secondary indicators are given later in the description.

In embodiments, the secondary indicators are determined using neural network hereafter called fusion models FM. Each fusion model takes as input a plurality of elements among state indicators Em_I and data DT to output a secondary indicator. Each of these fusion models FM has been trained on a distinct dataset.

In step S30, a Bayesian model is used to determine probabilities Em_P of each of different possible states of the user U.

In this embodiment, the Bayesian model takes as input the secondary indicators Em_I2 as well as several elements among the data DT and the state indicators Em_I, and outputs, for each of said possible states of the user, an a posteriori probability of the user being in this state given the inputs (secondary indicators, data and state indicators).

The Bayesian model used here for inferring a posteriori probabilities is formed based on reference data comprising reference inputs (each input comprising same type of secondary indicators, data representative of the user and its environment and state indicators) and their corresponding state (which may have been determined manually by experts).

In embodiments, the Bayesian model may be a naive Bayes model.

In embodiments, the Bayesian model may be a Bayesian neural network. Implementation details of Bayesian neural networks are given in the document of Harper et al: "A Bayesian Deep Learning Framework for End-To-End Prediction of Emotion from Heartbeat", 2020, arXiv:1902.03043.

In the embodiment described here, the different possible states are emotional states (e.g. fear, anger, surprise, content), as specified later in the description. Advantageously, the Bayesian model can infer probabilities even if a part the input is missing. For instance, if only the input A is given over the inputs A and B, the Bayesian model may output a probability of state given A instead of the probability given A and B.

In step S40, the obtained probabilities Em_P of states and the event indicator Ev_I determined in step S20 are used to determine the state Em_S of the user U and the event Ev_C causing this state.

In the embodiment described here, the step of determining a state of the user comprises a substep S401, wherein one or more knowledge ontologies KO are used to determine, for the state Em_S of the user (in this case one of the aforementioned emotional states) which have the maximum probability (among the probabilities Em_P), one or more events P_C which could potentially cause this state. In an embodiment, the emotion ontology Concept Net is used to determine these potential causes P_C (https://conceptnet.io/c/en/emotion in August 2022).It is stressed here that the potential causes P_C do not correspond to current detected events but rather to expression that are semantically linked with the aforementioned states. For instance, for the emotional state "fear", potential causes are "an obstacle in front of the car" or "thunder noise".

The step S40 further comprises a substep S402, wherein the cause Ev_C of the state Em_S of the user is determined based on the potential causes P_C and the event indicator Ev_I, using a set of rules forming a causal model.

Examples of rules forming a causal model to determine causes are presented in the document of Besnard et al: "Ontology-based inference for causal explanation", 2010, arXiv:1004.4801. For instance, if the state Em_S is "fear" and if the following conditions are met:
- the event indicator Ev_I indicates the event "thunder noise"; a potential cause of the state "fear" is "sudden noise"; and
- according to the ontology, "thunder noise" is a particular "sudden noise",
then the cause of the state "fear" is the event "thunder noise".

In step S45, a condition Cdt for stopping repeating the iterations of steps S10-S40 is tested.

In embodiments, this condition is that a given number (superior than or equal to one) of said iterations are performed.

In other embodiments, the condition is based on the state Em_S and/or the event Ev_C determined in the current iteration. The condition may be that the state Em_S or the event Ev_C belong to a given set of states and/or events which may endanger the user U or its device Dev. Such a state may be "fear" and such an event may be "an obstacle occurring in front of the car". The condition may also be that the combination of the state Em_S and the event Ev_C may endanger the user. For instance, the state "fear" caused by the event "an obstacle occurring in front of the car" may endanger the user, whereas the same state "fear" caused by the event "thunder noise" does not. These embodiments enable to directly determine and apply an action if a danger exists.

Once the condition Cdt is met, the step S50 is performed. In step S50, an action is determined by a control policy CP based on the one or more states Em_S and events Ev_C determined during the one or more iterations of steps S10-S40.

In step S60, a command of the action Ac is applied by the device Dev, such that the device performs the action Ac.

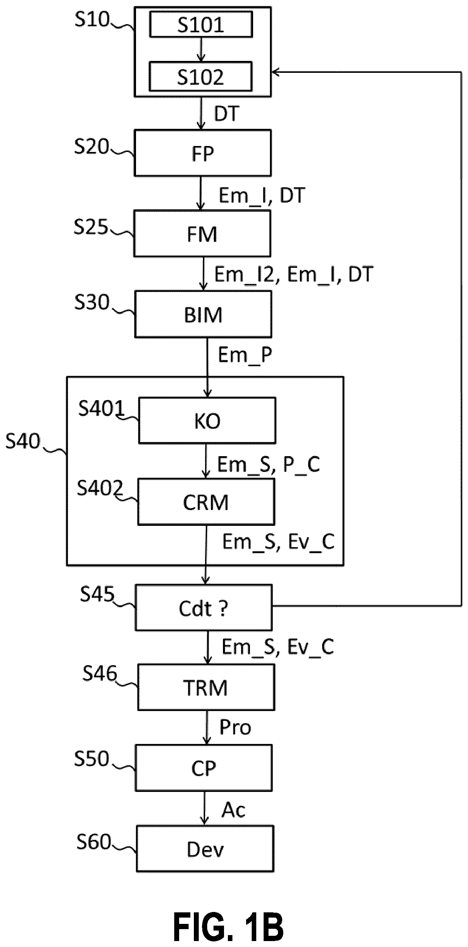

FIG. 1B represents the steps of the method for controlling a device according to another embodiment. This embodiment differs from the embodiment represented in FIG. 1A in that it comprises an additional step S46 of determining a profile Pro of the user U based on the states Em_S and the events Ev_C determined during the iterations of steps S10-S40 as described above. Furthermore, the action Ac is determined based on this profile Pro.

The profile is determined using a second set of rules forming a temporal reasoning model TRM.

The profile may indicate the dominant state of the user during a period of time (during which the iterations of steps S40-S45 were repeated). In particular, the profile Pro enables to take into account the changes across time of user state, when determining the action Ac.

This enables to determine an action with respect to a state that extends over time. For instance, if a state of stress or discomfort is dominant in the profile Pro, the policy control may determine an action to decrease user's stress or improve its comfort (e.g. playing calm music).

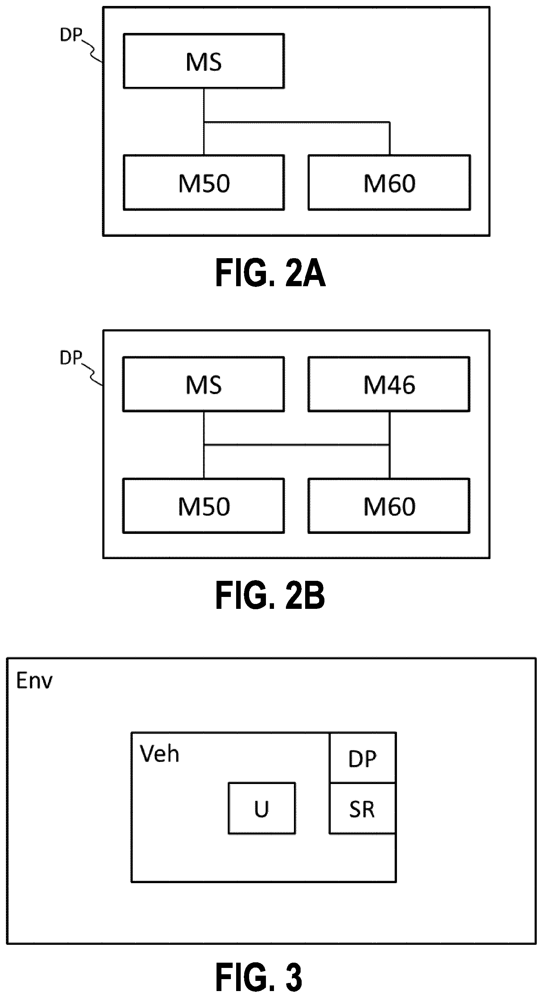

FIG. 2A represents the functional architecture of a data processing device DP implementing the steps of the method according to a particular embodiment represented in FIG. 1A.

The data processing device DP comprises:
- a module MS for performing iterations of steps S10-S45 described previously;
- a module M50 for performing the step S50 of determining a control action Ac; and
- a module M60 for performing the step S60 of sending a command of the device Dev to perform the control action Ac.

FIG. 2B represents the functional architecture of a data processing device DP' implementing the steps of the method according to a particular embodiment represented in FIG. 1B.

Compared to the data processing device DP previously described, the data processing device DP' comprises a module M46 for performing the step S46 of determining a profile Pro of the user.

FIG. 3 represents a vehicle Veh driven by a user U and comprising a data processing device DP as previously described and sensors SR for acquiring data (primary features) of the user and its environment Env.

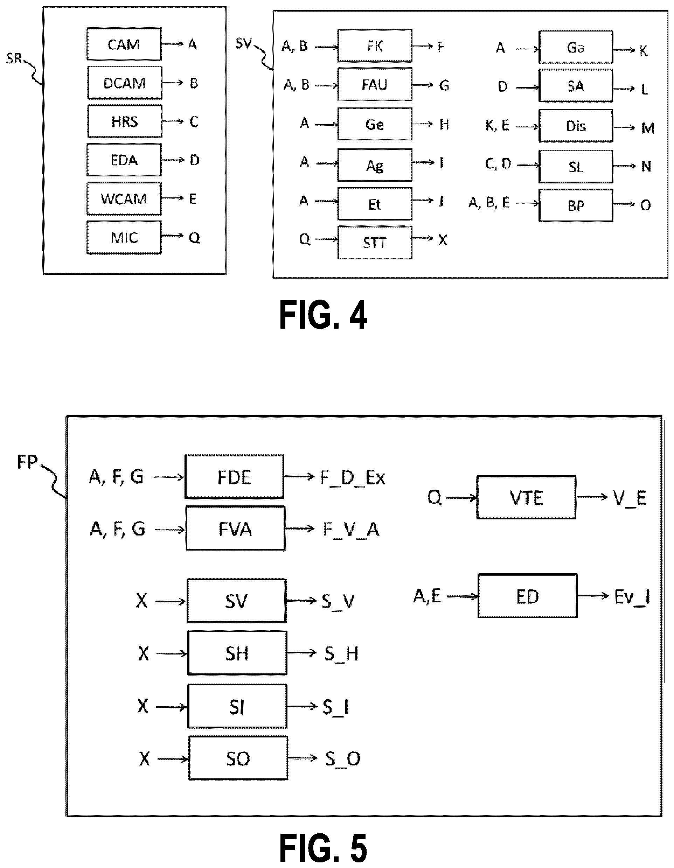

FIG. 4 represents sensors SR and virtual sensors SV used in step S10 of obtaining the data DT, in accordance with the method described previously with reference to FIG. 1A or FIG. 1B in an embodiment.

In this embodiment, the sensors SR are:
- a first RGB camera CAM directed toward the user U;
- a second RGB camera WCAM directed toward the space around the user (e.g. the space around the car if the device is a car);
- a microphone MIC;
- a depth camera DCAM directed toward the user;
- an heart rate sensor HRS placed on the user; and
- an electrodermal activity sensor EDA in contact with the skin of the user.

The first RGB camera provides images A of the user U. The second RGB camera WCAM provides images E of the environment Env. The depth camera DCAM provides depth maps B focusing on the user U. The heart rate sensor provide the heart rate C of the user U. The electrodermal activity sensor EDA provides the electrodermal activity of the user. The electrodermal activity D is a sequence of values of electrical conductance of the user's skin. The variation of conductance of the skin is correlated with the level of stress. The microphone MIC provides an audio sequence Q.

The data A, B, C, D, E and Q are primary features of the user U and its environment Env.

These primary features are used as input of the plurality of virtual sensors SV for determining secondary features as followed:
- A and B are used as input by the virtual sensor FK for determining facial keypoints F of the user;
- A and B are used as input of FAU for determining facial action units G of the user;
- A is used as input of Ge for determining gender H of the user;
- A is used as input of Ag for determining age I of the user;
- A is used as input of Et for determining ethnicity J of the user;
- A is used as input of Ga for determining gaze direction (e.g. a vector of coordinates x, y, z in three-dimensional space) K of the user;
- D is used as input of SA for determining a level of skin arousal L of the user;
- E is used as input of D is for determining a level of distraction M of the user
- C and D are used as input of SL for determining a stress level N of the user;
- A, B and E are used as input of BP for determining a body pose O (for instance sitting or standing) of the user; and
- Q is used as input of STT for determining a text transcription X of the speech of the user.

Also, the secondary feature K is also used as input of the virtual sensor Dis for determining the level of distraction M.

FIG. 5 represents neural networks FP for determining state indicators, based on primary and secondary features obtained by the sensors SR and the virtual sensors SV.

The state indicators are determined as followed:
- The images A of the user, its facial keypoints F and facial action units G are used as input of the neural network FDE for determining a facial expression F_D_Ex of the user;
- A, F and G are used as input of the neural network FVA for determining an indicator F_V_A of valence and arousal of the user's facial expression;
- The speech transcription X is used as input of SV for determining the valence SV in the user's speech;
- X is used as input of SH for determining the level of hate S_H in the user's speech;
- X is used as input of SI for determining the level of irony S_I in the user's speech;
- X is used as input of SO for determining the level of offensiveness S_O in the user's speech; and
- The audio sequence Q is used as input of VTE for determining an emotion V_E in the tone of the user's speech.

Furthermore, the images A and E of the user and its environment are used as input of ED for determining an event indicator Ev_I.

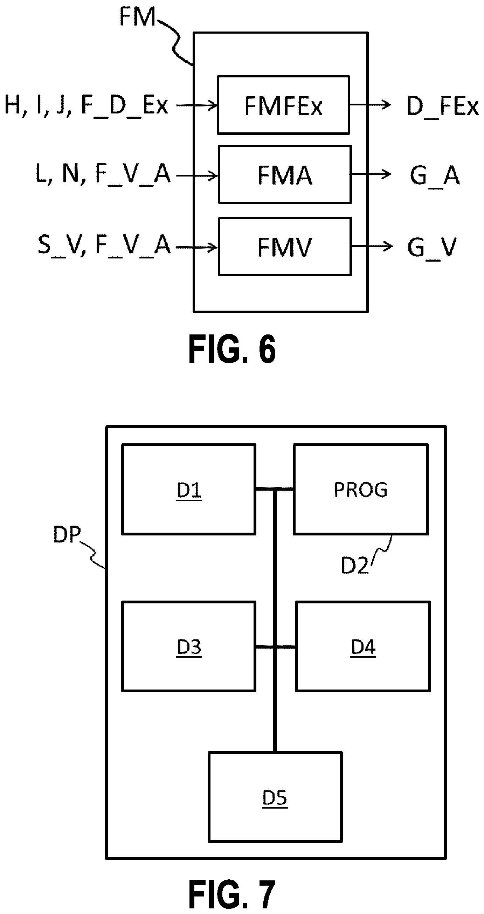

FIG. 6 represents neural networks FM (also called fusion models) for determining secondary indicators as followed:
- The fusion model FMFEx takes as input the facial expression F_D_Ex as well as the data H, I and J (age, gender and ethnicity) to output a a so-called fused facial expression D_FEx corresponding to a corrected facial expression which take into account the factors of age, gender and ethnicity;
- The fusion model FMA takes as input the facial valence and arousal indicator F_V_A as well as the skin arousal L and the stress level N to determine a global arousal score G_A of the user; and
- The fusion model FMV takes as input the speech level of valence S_V and the facial valence and arousal indicator F_V_A to determine a global valence score G_V.

In an embodiment, after the determining of the secondary indicators as previously described, the Bayesian model BIM takes as input the previously mentioned secondary indicators (D_FEx, G_A and G_V) as well as: V_E, S_H, S_I, S_O and O. Accordingly, the Bayesian model BIM output a posteriori probabilities of states of the user given the aforementioned inputs.

In the present embodiment, the states of which the probabilities are determined are: stress, fear, anger, content, happiness, sadness, and surprise.

FIG. 7 depicts the hardware architecture of a device DP for compressing data according to an embodiment.

In the embodiment described herein, the device DP has a hardware architecture of a computer. In particular, it comprises a processor D1, a read-only memory D2, a random access memory D3, a rewritable non-volatile memory D4 and communication means D5.

The read-only memory D2 of the device DP constitutes a storage medium in accordance with the invention, readable by the processor D1 and on which is stored a computer program PROG in accordance with the invention, this program comprising instructions for executing the steps of a method in accordance with the invention described previously with reference to FIG. 1A in an embodiment.

The computer program PROG defines functional modules of the device DP shown in FIG. 2A.

## Claims

1. A computer-implemented method for controlling a device (Dev), said method comprising at least one iteration (I1-IT) comprising:
• obtaining (S10), using sensors (SR), data (DT) representative of said user (Us) and of an environment (Env) in which the user is;
• determining (S20), based on said data (DT), indicators (Em_I) of states of said user and at least one event indicator (Ev_I) of an event occurring in said environment (Env);
• determining (S30), based on said state indicators (Em_I) and said data (DT), using a Bayesian inference model (BIM), probabilities (Em_P) of states of said user (Us); and
• determining (S40), based on said probabilities (Em_P) and said at least one event indicator (Ev_I), using a first set of rules (CRM), at least one state (Em_S) of said user and at least one event (Ev_C) causing the user to be in said at least one state;
said at least one iteration (I₁-I₁) being repeated until a condition (Cdt) is fulfilled, said method being **characterized in that** it further comprises:
• determining (S46) a profile (Pro) of said user (Us) based on said at least one state (Em_S) and event (Ev_C) obtained during at least one said iteration (I1-IT), and using a second set of rules (TRM) capturing changes over time and expressing the truth or falsity of statements at different times, said profile indicating a dominant state of the user during a period of time during which said at least one said iteration (I1-IT) is performed,
• determining (S50), based on said at least one state (Em_S), event (Ev_C) obtained during at least one said iteration (I1-IT) and said profile (Pro) of said user (Us), using a control policy (CP), a control action (Ac) of said device; and
• sending (S60) a command to said device (Dev) to perform said control action (Ac).

2. The method according to claim 1 wherein the step (S30) of determining probabilities is further based on at least one secondary state indicator (Em_I2) determined based on at least one said state indicator (Em_I) and at least one other element among said state indicators (Em_I) and said data (DT).

3. The method according to claim 2, wherein the at least one secondary state indicator (Em_I2) is determined using at least one neural network (FM).

4. The method according to any of claims 1 to 3, wherein said state indicators (Em_I) said and at least one event indicator (Ev_I) are determined (S20) using at least one neural network (FP).

5. The method according to any of claims 1 to 4, wherein said step of determining (S40) said at least one state (Em_S) and at least one event (Ev_C) is further based on at least one potential cause (P_C) of said at least one state (Em_S), said potential causes (P_C) being obtained using a knowledge ontology (KO).

6. The method according to any of claim 1 to 5, wherein said data (DT) comprise primary features and at least one secondary feature, and wherein said step of obtaining (S10) said data comprises the substeps of:
• obtaining (S101) said primary features using said sensors (SR); and
• determining (S102), based on said primary features, using at least one virtual sensor (SV), said at least one secondary feature.

7. The method according to any of claims 1 to 6, wherein said condition (Cdt) is met when the at least one state and/or the at least one event obtained during current iteration belong to a given set of states and/or events which may endanger the user (Us).

8. The method according to any of claim 1 to 7, wherein said sensors (SR) comprise at least one of the following sensors:
• an RGB camera (CAM, WCAM);
• a microphone (MIC);
• a depth camera (DCAM);
• an heart rate sensor (HRS); and
• an electrodermal activity sensor (EDA).

9. The method according to any of claim 1 to 8, wherein said device is a car and wherein said action is a safety manoeuvre.

10. A data processing device (DP) for controlling a device (Dev), said data processing device (DP) comprising a module (MS) for implementing at least one iteration comprising:
• obtaining (S10), using sensors (SR), data (DT) representative of said user (Us) and of an environment (Env) in which the user is;
• determining (S20), based on said data (DT), state indicators (Em_I) of said user and at least one event indicator (Ev_I) of an event occurring in said environment (Env);
• determining (S30), based on said state indicators (Em_I) and said data (DT), using a Bayesian inference model (BIM), probabilities (Em_P) of states of said user (Us); and
• determining (S40), based on said probabilities (Em_P) and said at least one event indicator (Ev_I), using a first set of rules (CRM), at least one state (Em_S) of said user and at least one event (Ev_C) causing the user to be in said at least one state;
said at least one iteration (I₁-I_{T}) being repeated until a condition (Cdt) is fulfilled, said data processing device being **characterized in that** it further comprises:
• a module of determining (M46) ) a profile (Pro) of said user (Us) based on said at least one state (Em_S) and event (Ev_C) obtained during at least one said iteration (I1-IT), and using a second set of rules (TRM) capturing changes over time and expressing the truth or falsity of statements at different times, said profile indicating a dominant state of the user during a period of time during which said at least one said iteration (I1-IT) is performed,
• a module of determining (M50), based on said at least one state (Em_S) and event (Ev_C) obtained during at least one said iteration (I1-IT) and said profile (Pro) of said user (Us), using a control policy (CP), a control action (Ac) of said device; and
• a module of sending (M60) a command to said device (Dev) to perform said control action (Ac).

11. A vehicle equipped with a data processing device (DP) according to claim 10.

12. A computer program (PROG) including instructions for executing a method according to any of claims 1 to 9 when said program is executed by a computer.

13. A recording medium (D2) readable by a computer and having recorded thereon a computer program (PROG) according to claim 12.

## Patentansprüche

1. Computerimplementiertes Verfahren zum Steuern einer Vorrichtung (Dev), das Verfahren umfassend mindestens eine Iteration (I1-IT), umfassend:
• Erlangen (S10), unter Verwendung von Sensoren (SR), von Daten (DT), die repräsentativ für den Benutzer (Us) und eine Umgebung (Env), in der sich der Benutzer befindet, sind;
• Bestimmen (S20), basierend auf den Daten (DT), von Indikatoren (Em_I) von Zuständen des Benutzers und mindestens eines Ereignisindikators (Ev_I) eines in der Umgebung (Env) auftretenden Ereignisses;
• Bestimmen (S30), basierend auf den Zustandsindikatoren (Em_I) und den Daten (DT), unter Verwendung eines bayesschen Inferenzmodells (BIM), von Wahrscheinlichkeiten (Em_P) von Zuständen des Benutzers (Us); und
• Bestimmen (S40), basierend auf den Wahrscheinlichkeiten (Em_P) und dem mindestens einen Ereignisindikator (Ev_I), unter Verwendung eines ersten Satzes von Regeln (CRM), mindestens eines Zustands (Em_S) des Benutzers und mindestens eines Ereignisses (Ev_C), das bewirkt, dass der Benutzer in dem mindestens einen Zustand ist;
wobei die mindestens eine Iteration (I₁-I_{T}) wiederholt wird, bis eine Bedingung (Cdt) erfüllt ist, wobei das Verfahren **dadurch gekennzeichnet ist, dass** es ferner Folgendes umfasst:
• Bestimmen (S46) eines Profils (Pro) des Benutzers (Us) basierend auf dem mindestens einen Zustand (Em_S) und Ereignis (Ev_C), die während mindestens einer Iteration (I1_IT) erlangt werden, und unter Verwendung eines zweiten Satzes von Regeln (TRM), die Änderungen im Lauf der Zeit erfassen und die Wahrheit oder Falschheit von Aussagen zu verschiedenen Zeiten ausdrücken, wobei das Profil einen dominanten Zustand des Benutzers während eines Zeitraums angibt, in der die mindestens eine Iteration (I1-IT) durchgeführt wird,
• Bestimmen (S50), basierend auf dem mindestens einen Zustand (Em_S), einem Ereignis (Ev_C), das während mindestens einer der Iteration (I1-IT) erlangt wird, und dem Profil (Pro) des Benutzers (Us), unter Verwendung einer Steuerungsrichtlinie (CP), einer Steuerungsaktion (Ac) der Vorrichtung; und
• Senden (S60) eines Befehls an die Vorrichtung (Dev), um die Steuerungsaktion (Ac) durchzuführen.

2. Verfahren nach Anspruch 1, wobei der Schritt (S30) eines Bestimmens von Wahrscheinlichkeiten ferner auf mindestens einem sekundären Zustandsindikator (Em_12) basiert, der basierend auf mindestens einem von dem Zustandsindikator (Em_I) und mindestens einem anderen Element von dem Zustandsindikatoren (Em_I) und den Daten (DT) bestimmt wird.

3. Verfahren nach Anspruch 2, wobei der mindestens eine sekundäre Zustandsindikator (Em_12) unter Verwendung mindestens eines neuronalen Netzes (FM) bestimmt wird.

4. Verfahren nach einem der Ansprüche 1 bis 3, wobei die Zustandsindikatoren (Em_I), der und mindestens ein Ereignisindikator (Ev_I) unter Verwendung mindestens eines neuronalen Netzes (FP) bestimmt (S20) werden.

5. Verfahren nach einem der Ansprüche 1 bis 4, wobei der Schritt eines Bestimmens (S40) des mindestens einen Zustands (Em_S) und mindestens eines Ereignisses (Ev_C) ferner auf mindestens einer potenziellen Ursache (P_C) des mindestens einen Zustands (Em_S) basiert, wobei die potenziellen Ursachen (P_C) unter Verwendung einer Wissensontologie (KO) erlangt werden.

6. Verfahren nach einem der Ansprüche 1 bis 5, wobei die Daten (DT) primäre Merkmale und mindestens ein sekundäres Merkmal umfassen, und wobei der Schritt eines Erlangens (S10) der Daten die folgenden Teilschritte umfasst:
• Erlangen (S101) der primären Merkmale unter Verwendung der Sensoren (SR); und
• Bestimmen (S102), basierend auf den primären Merkmalen, unter Verwendung mindestens eines virtuellen Sensors (SV), des mindestens einen sekundären Merkmals.

7. Verfahren nach einem der Ansprüche 1 bis 6, wobei die Bedingung (Cdt) erfüllt ist, wenn der mindestens eine Zustand und/oder das mindestens eine Ereignis, die während einer aktuellen Iteration erlangt werden, zu einem gegebenen Satz von Zuständen und/oder Ereignissen gehören, die den Benutzer (Us) gefährden können.

8. Verfahren nach einem der Ansprüche 1 bis 7, wobei die Sensoren (SR) mindestens einen der folgenden Sensoren umfassen:
• eine RGB-Kamera (CAM, WCAM);
• ein Mikrofon (MIC);
• eine Tiefenkamera (DCAM);
• einen Herzfrequenzsensor (HRS); und
• einen elektrodermalen Aktivitätssensor (EDA).

9. Verfahren nach einem der Ansprüche 1 bis 8, wobei die Vorrichtung ein Auto ist und wobei die Aktion ein Sicherheitsmanöver ist.

10. Datenverarbeitungsvorrichtung (DP) zum Steuern einer Vorrichtung (Dev), die Datenverarbeitungsvorrichtung (DP) umfassend ein Modul (MS) zum Implementieren mindestens einer Iteration, umfassend:
• Erlangen (S10), unter Verwendung von Sensoren (SR), von Daten (DT), die repräsentativ für den Benutzer (Us) und eine Umgebung (Env), in der sich der Benutzer befindet, sind;
• Bestimmen (S20), basierend auf den Daten (DT), von Zustandsindikatoren (Em_I) des Benutzers und mindestens eines Ereignisindikators (Ev_I) eines in der Umgebung (Env) auftretenden Ereignisses;
• Bestimmen (S30), basierend auf den Zustandsindikatoren (Em_I) und den Daten (DT), unter Verwendung eines bayesschen Inferenzmodells (BIM), von Wahrscheinlichkeiten (Em_P) von Zuständen des Benutzers (Us); und
• Bestimmen (S40), basierend auf den Wahrscheinlichkeiten (Em_P) und dem mindestens einen Ereignisindikator (Ev_I), unter Verwendung eines ersten Satzes von Regeln (CRM), mindestens eines Zustands (Em_S) des Benutzers und mindestens eines Ereignisses (Ev_C), das bewirkt, dass der Benutzer in dem mindestens einen Zustand ist;
wobei die mindestens eine Iteration (I₁-I_{T}) wiederholt wird, bis eine Bedingung (Cdt) erfüllt ist, wobei die Datenverarbeitungsvorrichtung **dadurch gekennzeichnet ist, dass** sie ferner Folgendes umfasst:
• ein Modul zum Bestimmen (M46) eines Profils (Pro) des Benutzers (Us) basierend auf dem mindestens einen Zustand (Em_S) und Ereignis (Ev_C), die während mindestens einer Iteration (I1_IT) erlangt werden, und unter Verwendung eines zweiten Satzes von Regeln (TRM), die Änderungen im Lauf der Zeit erfassen und die Wahrheit oder Falschheit von Aussagen zu verschiedenen Zeiten ausdrücken, wobei das Profil einen dominanten Zustand des Benutzers während eines Zeitraums angibt, in der die mindestens eine Iteration (I1-IT) durchgeführt wird,
• ein Modul zum Bestimmen (M50), basierend auf dem mindestens einen Zustand (Em_S), einem Ereignis (Ev_C), das während mindestens einer der Iteration (I1-IT) erlangt wird, und dem Profil (Pro) des Benutzers (Us), unter Verwendung einer Steuerungsrichtlinie (CP), einer Steuerungsaktion (Ac) der Vorrichtung; und
• ein Modul zum Senden (M60) eines Befehls an die Vorrichtung (Dev), um die Steuerungsaktion (Ac) durchzuführen.

11. Fahrzeug, das mit einer Datenverarbeitungsvorrichtung (DP) nach Anspruch 10 ausgerüstet ist.

12. Computerprogramm (PROG), das Anweisungen zum Ausführen eines Verfahrens nach einem der Ansprüche 1 bis 9 beinhaltet, wenn das Programm von einem Computer ausgeführt wird.

13. Aufzeichnungsmedium (D2), das von einem Computer lesbar ist und auf dem ein Computerprogramm (PROG) nach Anspruch 12 aufgezeichnet ist.

## Revendications

1. Procédé mis en œuvre par ordinateur pour commander un dispositif (Dev), ledit procédé comprenant au moins une itération (I1-IT) comprenant :
• l'obtention (S10), en utilisant des capteurs (SR), de données (DT) représentatives dudit utilisateur (Us) et d'un environnement (Env) dans lequel se trouve l'utilisateur ;
• la détermination (S20), sur la base desdites données (DT), d'indicateurs (Em_I) d'états dudit utilisateur et de au moins un indicateur d'événement (Ev_I) d'un événement se produisant dans ledit environnement (Env) ;
• la détermination (S30), sur la base desdits indicateurs d'état (Em_I) et desdites données (DT), en utilisant un modèle d'inférence bayésienne (BIM), de probabilités (Em_P) d'états dudit utilisateur (Us) ; et
• la détermination (S40), sur la base desdites probabilités (Em_P) et dudit au moins un indicateur d'événement (Ev_I), en utilisant un premier ensemble de règles (CRM), de au moins un état (Em_S) dudit utilisateur et de au moins un événement (Ev_C) amenant l'utilisateur à être dans ledit au moins un état ;
ladite au moins une itération (I1-IT) étant répétée jusqu'à ce qu'une condition (Cdt) soit remplie, ledit procédé étant **caractérisé en ce qu'**il comprend en outre :
• la détermination (S46) d'un profil (Pro) dudit utilisateur (Us) sur la base desdits au moins un état (Em_S) et événement (Ev_C) obtenus pendant ladite au moins une itération (I1-IT), et en utilisant un deuxième ensemble de règles (TRM) capturant des changements au fil du temps et exprimant la vérité ou la fausseté des états à différents instants, ledit profil indiquant un état dominant de l'utilisateur au cours d'une période pendant laquelle ladite au moins une itération (I1-IT) est réalisée,
• la détermination (S50), sur la base desdits au moins un état (Em_S), événement (Ev_C) obtenus pendant ladite au moins une itération (I1-IT) et dudit profil (Pro) dudit utilisateur (Us), en utilisant une politique de commande (CP), d'une action de commande (Ac) dudit dispositif ; et
• l'envoi (S60) d'une commande audit dispositif (Dev) pour réaliser ladite action de commande (Ac).

2. Procédé selon la revendication 1, selon lequel l'étape (S30) de détermination des probabilités est en outre basée sur au moins un indicateur d'état secondaire (Em_I2) déterminé sur la base dudit au moins un indicateur d'état (Em_I) et au moins un autre élément parmi lesdits indicateurs d'état (Em_I) et lesdites données (DT).

3. Procédé selon la revendication 2, selon lequel le au moins un indicateur d'état secondaire (Em_I2) est déterminé en utilisant au moins un réseau neuronal (FM).

4. Procédé selon l'une quelconque des revendications 1 à 3, selon lequel lesdits indicateurs d'état (Em_I) et ledit au moins un indicateur d'événement (Ev_I) sont déterminés (S20) en utilisant au moins un réseau neuronal (FP) .

5. Procédé selon l'une quelconque des revendications 1 à 4, selon lequel ladite étape de détermination (S40) desdits au moins un état (Em_S) et au moins un événement (Ev_C) est en outre basée sur au moins une cause potentielle (P_C) dudit au moins un état (Em_S), lesdites causes potentielles (P_C) étant obtenues en utilisant une ontologie de connaissance (KO).

6. Procédé selon l'une quelconque des revendications 1 à 5, selon lequel lesdites données (DT) comprennent des caractéristiques principales et au moins une caractéristique secondaire, et selon lequel ladite étape d'obtention (S10) desdites données comprend les étapes secondaires de :
• obtention (S101) desdites caractéristiques principales en utilisant lesdits capteurs (SR) ; et
• détermination (S102), sur la base desdites caractéristiques principales, en utilisant au moins un capteur virtuel (SV), de ladite au moins une caractéristique secondaire.

7. Procédé selon l'une quelconque des revendications 1 à 6, selon lequel ladite condition (Cdt) est remplie quand le au moins un état et/ou le au moins un événement obtenus pendant une itération en cours appartiennent à un ensemble donné d'états et/ou d'événements qui peuvent mettre en danger l'utilisateur (Us).

8. Procédé selon l'une quelconque des revendications 1 à 7, selon lequel lesdits capteurs (SR) comprennent au moins un des capteurs suivants :
• une caméra RVB (CAM, WCAM) ;
• un microphone (MIC) ;
• une caméra de profondeur (DCAM) ;
• un capteur de fréquence cardiaque (HRS) ; et
• un capteur d'activité électrodermique (EDA).

9. Procédé selon l'une quelconque des revendications 1 à 8, selon lequel ledit dispositif est une automobile et selon lequel ladite action est une manœuvre de sécurité.

10. Dispositif de traitement de données (DP) destiné à commander un dispositif (Dev), ledit dispositif de traitement de données (DP) comprenant un module (MS) pour mettre en application au moins une itération comprenant :
• l'obtention (S10), en utilisant des capteurs (SR), de données (DT) représentatives dudit utilisateur (Us) et d'un environnement (Env) dans lequel se trouve l'utilisateur ;
• la détermination (S20), sur la base desdites données (DT), d'indicateurs d'état (Em_I) dudit utilisateur et de au moins un indicateur d'événement (Ev_I) d'un événement se produisant dans ledit environnement (Env) ;
• la détermination (S30), sur la base desdits indicateurs d'état (Em_I) et desdites données (DT), en utilisant un modèle d'inférence bayésienne (BIM), de probabilités (Em_P) d'états dudit utilisateur (Us) ; et
• la détermination (S40), sur la base desdites probabilités (Em_P) et dudit au moins un indicateur d'événement (Ev_I), en utilisant un premier ensemble de règles (CRM), de au moins un état (Em_S) dudit utilisateur et de au moins un événement (Ev_C) amenant l'utilisateur à être dans ledit au moins un état ;
ladite au moins une itération (I₁-I_{T}) étant répétée jusqu'à ce qu'une condition (Cdt) soit remplie, ledit dispositif de traitement étant **caractérisé en ce qu'**il comprend en outre :
• un module de détermination (M46) d'un profil (Pro) dudit utilisateur (Us) sur la base desdits au moins un état (Em_S) et événement (Ev_C) obtenus pendant ladite au moins une itération (I1-IT), et en utilisant un deuxième ensemble de règles (TRM) capturant des changements au fil du temps et exprimant la vérité ou la fausseté des états à différents instants, ledit profil indiquant un état dominant de l'utilisateur au cours d'une période pendant laquelle ladite au moins une itération (I1-IT) est réalisée,
• un module de détermination (M50), sur la base desdits au moins un état (Em_S), événement (Ev_C) obtenus pendant ladite au moins une itération (I1-IT) et dudit profil (Pro) dudit utilisateur (Us), en utilisant une politique de commande (CP), d'une action de commande (Ac) dudit dispositif ; et
• un module d'envoi (S60) d'une commande audit dispositif (Dev) pour réaliser ladite action de commande (Ac).

11. Véhicule équipé d'un dispositif de traitement de données (DP) selon la revendication 10.

12. Programme informatique (PROG) comprenant des instructions pour exécuter un procédé selon l'une quelconque des revendications 1 à 9 quand ledit programme est exécuté par un ordinateur.

13. Support d'enregistrement (D2) lisible par un ordinateur et ayant enregistré dessus un programme informatique (PROG) selon la revendication 12.
